# FASCICULE DE BREVET EUROPEEN

(11) **EP 1 858 990 B1**
(45) Date de publication et mention de la délivrance du brevet: **25.02.2009**
(21) Numéro de dépôt: 06725090.2
(22) Date de dépôt: 16.03.2006
(51) Int. Cl.: C09D 11/00

(54) **COMPOSITION D'ENCRE POUR L'IMPRESSION PAR JET CONTINU DEVIE**
TINTENZUSAMMENSETZUNG ZUM KONTINUIERLICHEN ABGELENKTEN TINTENSTRAHLDRUCKEN
INK COMPOSITION FOR CONTINUOUS DEFLECTED INK JET PRINTING

(30) Priorité: 18.03.2005 FR 0550699
(43) Date de publication de la demande: 28.11.2007
(73) Titulaire: IMAJE S.A., 26500 Bourg les Valence (FR)
(72) Inventeur: DE SAINT-ROMAIN, Pierre, F-26000 Valence (FR)
(74) Mandataire: Poulin, Gérard
(86) Numéro de dépôt international: PCT/EP2006/060776
(87) Numéro de publication internationale: WO 2006/097502

(56) Documents cités:
- EP-A- 0 237 788
- FR-A- 2 796 959
- US-A1- 2002 144 626
- DATABASE WPI Section Ch, Week 197804 Derwent Publications Ltd., London, GB; Class E13, AN 1978-07417A XP002354623 & JP 52 148307 A (SAILOR PEN CO LTD) 9 décembre 1977 (1977-12-09)

## Description

### DOMAINE TECHNIQUE

L'invention concerne une composition d'encre pour le marquage de supports et d'objets de toutes sortes dont les propriétés sont particulièrement bien adaptées au marquage ou à l'impression par jet de liquide et tout particulièrement au marquage par jet d'encre continu dévié d'une très grande variété de supports, aussi bien poreux que non poreux.

L'impression par jet d'encre est une technique bien connue, qui permet l'impression, le marquage, ou la décoration de toutes sortes d'objets, à grande vitesse, et sans contact de ces objets avec le dispositif d'impression, de messages variables à volonté, tels que codes barres, dates limites de vente, etc. et ce, même sur des supports non plans.

Les systèmes d'impression par jet d'encre se divisent en deux grands types : « goutte à la demande » (Drop on demand, DOD) ou « jet continu » (CJ) .

Nous nous intéresserons plus particulièrement à cette dernière technique, plus précisément à la technique du jet continu dévié.

La projection par jet continu dévié consiste à envoyer sous pression de l'encre dans une cavité contenant un cristal piézo-électrique, d'où l'encre s'échappe par un orifice (buse) sous la forme d'un jet. Le cristal piézo-électrique, vibrant à une fréquence déterminée, provoque des perturbations de pression dans le jet d'encre, qui oscille et se brise progressivement en gouttelettes sphériques. Une électrode, placée sur le trajet du jet, là où il se brise, permet de donner à ces gouttes une charge électrostatique, si l'encre est conductrice. Les gouttes ainsi chargées sont défléchies dans un champ électrique et permettent l'impression. Les gouttes non chargées, donc non défléchies sont récupérées dans une gouttière où l'encre est aspirée, puis recyclée vers le circuit d'encre.

Ce type de projection d'encre par jet assure un marquage sans contact à grande vitesse de défilement sur des objets non nécessairement plans et avec la possibilité de changer de message à volonté. La technique est particulièrement adaptée pour le marquage et l'identification (dates de péremption, numéros de série, de lot, de codes barre etc.) de produits industriels sur les chaines de production.

Le domaine d'application décrit nécessite des formulations d'encre variées, adaptées à la variété des substrats à marquer (métal, plastiques, verre, etc ...) et répondant à une très grande variété de contraintes industrielles.

Les compositions d'encre, aptes à la projection par jet continu dévié, doivent satisfaire un certain nombre de critères inhérents à cette technique, relatifs, entre autres, à la viscosité, la conductivité électrique, la solubilité dans un solvant pour le nettoyage, la compatibilité des ingrédients, le mouillage correct des supports à marquer, etc.

De plus, ces encres doivent sécher rapidement, être capables de passer par la buse sans la boucher, avec une grande stabilité d'orientation du jet tout en permettant un nettoyage facile de la tête d'impression.

Les ingrédients qui composent les encres actuelles, pour le jet d'encre de type jet continu dévié, sont des produits organiques ou minéraux ; il s'agit de matières colorantes, telles que des colorants ou pigments, de résines ou liants, dans un ou des solvant(s) plus ou moins volatil(s) ou dans l'eau, et éventuellement d'un ou de sel(s) de conductivité, ainsi que d'additifs divers.

Les matières colorantes sont appelées « colorants ou pigments », selon qu'elles sont respectivement solubles ou insolubles dans le solvant utilisé.

Les pigments, par nature insolubles, sont donc dispersés et peuvent être opaques ou non. Ils apportent à l'encre sa couleur, son opacité, ou des propriétés optiques particulières, telles que la fluorescence (cf. brevets ou demandes de brevets US-A-4 153 593, US-A-4 756 758, US-A-4 880 465, EP-A-0 289 141, US-A-5 395 432, GB-A-2 298 713). Dans certains cas, les colorants apportent eux aussi suffisamment de conductivité à l'encre pour qu'il n'y ait pas besoin d'ajouter un sel de conductivité. Les colorants connus sous la dénomination C. I. Solvent Black 27, 29, 35 et 45 sont dans ce cas.

Le ou les liant(s) ou résine(s) est(sont) généralement pour la plupart un(des) composé(s) solide(s) et polymérique(s) et leur choix est dicté par leur solubilité dans les solvants sélectionnés et par leur compatibilité avec les colorants et les autres additifs, mais aussi et surtout en fonction des propriétés qu'ils apportent au film d'encre, une fois sec (voir brevets ou demandes de brevets US-A-4 834 799, GB-A-2 286 402, US-A-5 594 044, US-A-5 316 575, WO-A-96/23844, WO-A-95/29 287).

Leur fonction première est d'apporter à l'encre l'adhérence sur le maximum de supports ou sur des supports spécifiques, par exemple non poreux. Ils permettent aussi de donner à l'encre la viscosité adéquate pour la formation des gouttes à partir du jet et ils apportent à l'encre, ou plutôt au marquage obtenu, l'essentiel de ses propriétés de résistance aux agressions physiques et/ou chimiques.

Les additifs comprennent les dispersants qui permettent la dispersion des pigments, les surfactants qui modifient le pouvoir mouillant ou pénétrant de l'encre (US-A-5 395 431), en particulier ceux qui modifient ou régulent la tension superficielle statique ou dynamique, tels que le Fluorad^{®} FC 430 de la Société 3M^{®}, les agents qui inhibent la corrosion induite par les sels qui apportent la conductivité (voir documents EP-A-0 510 752, US-A-5 102 458), ou encore les additifs qui protègent l'encre contre les proliférations de bactéries et d'autres micro-organismes : il s'agit de biocides, bactéricides, fongicides et autres, particulièrement utiles dans les encres contenant de l'eau, les tampons régulateurs de pH (voir EP-A-0 735 120), les agents antimousse.

Le ou les sel(s) de conductivité éventuel(s) apporte(nt) à l'encre la conductivité nécessaire à la déviation électrostatique. On pourra à ce sujet se reporter au document US-A-4 465 800.

Parmi les sels qui apportent la conductivité, sont utilisés toutes sortes d'espèces ionisables, solubles et dissociables dans le milieu solvant de l'encre.

Pour les encres où le solvant majoritaire est l'eau, l'apport de conductivité à l'encre ne pose généralement pas de problème, car la plupart des produits solubles dans l'eau sont des espèces ionisables.

Mais le milieu aqueux ne permet pas une grande variété de formulation, car le pouvoir solvant de l'eau est limité, et la vitesse d'évaporation de l'eau trop lente pour pouvoir profiter des possibilités d'impression à grande vitesse que permet le jet d'encre. De plus la variété des solvants organiques de fort pouvoir dissolvant pour les polymères et les colorants permet de formuler des encres à séchage rapide et d'excellente adhérence sur toutes sortes de substrats.

En revanche, dans ces milieux organiques, la conductivité n'est possible que lorsque les solvants sont suffisamment dissociants, c'est-à-dire lorsque leur permittivité diélectrique et leur moment dipolaire sont suffisamment élevés. Lorsque c'est le cas, il faut trouver un sel dont le cation et l'anion soient suffisamment solubles dans le milieu.

Une quantité importante de sel peu conducteur peut affecter négativement le fonctionnement de l'imprimante par des bouchages de buse à l'arrêt. (Cf. EP-A-0 850 281, page 8, ligne 21) par la tendance de ces sels à cristalliser lorsque leur concentration est trop proche de leur limite de solubilité.

Parmi les sels couramment utilisés, on trouve ceux dont le cation est un métal alcalin tel que le Lithium, le Sodium, le Potassium (US-A-3,994,736) ou alcalino-terreux, (US-A-4 070 322, US-A-4 680 058) ; les sels d'ammonium, de tétra-alkyl ammonium par exemple de tétrabutylammonium (WO-A-00/63305), d'hydroxylamine, de diméthylamine (US-A-4 465 800), de diéthylamine ou de morpholine (US-A-4 155 767), de tétraalkyl phosphonium (US-A-5 755 860) ; ou encore la partie chromophore des colorants basiques (EP-A-0 034 881) ; et certains sels d'amine (US-A-4 567 213).

Parmi les différents types d'anions, on trouve cités les halogénures tels que les chlorures, les bromures (US-A-5 693 127), les iodures (US-A-5 637 139) ; les nitrates ; les thiocyanates (US-A-4 024 096) ; les formiates ; les acétates ; les propionates ; les sulfonates comme les para-toluène sulfonates (EP-A-0 034 881) ou les trifluorométhane sulfonates (US-A-6 251 175) ; les tétrafluoroborates (WO-A-00/63305) ; les bicarbonates ; les citrates ; les lactates et les alginates (US-A-5 800 601), les hydroxydes (WO-A-00/22055) ; les sulfates ; les phosphates (US-A-5 443 628) ; les hexafluorophosphates ; les hexafluoroantimonates .

Le choix des sels est guidé par :
- Leur capacité à apporter de la conductivité à l'encre au taux le plus faible possible ;
- Leur solubilité ;
- Leur corrosivité sur les métaux constituant les imprimantes ;
- Leur compatibilité/inertie chimique vis-à-vis des autres composants de l'encre (voir EP-A-0 465 039) ;
- Leur volatilité ;
- Leur solubilité dans l'eau qui peut être souhaitable ou néfaste selon les cas, par exemple pour la résistance de l'encre à l'eau ;
- Leur coût par unité de conductivité apportée.

La plupart des sels cités plus haut présentent un certain nombre d'inconvénients, ainsi :
- Les halogénures, fluorures, chlorures, et à un moindre degré les bromures et les iodures, ont un caractère corrosif très prononcé, au point que des additifs anti-corrosion sont nécessaires pour en limiter l'effet. Des amines secondaires ont été revendiquées dans le brevet US-A-5 102 458 (EP-A-0 510 752), et des dinonylnaphtalène sulfonates mentionnés dans le document US-A-5 270 368, afin de limiter la corrosion ;
- Les sels suffisamment solubles dans les solvants les moins polaires comme les cétones sont rares ;
- Tous les sels possibles ne sont pas compatibles avec l'ensemble des ingrédients des encres, en particulier les cations inorganiques comme Na, K, Li, Mg, dont la nature minérale ne se marie pas bien avec les résines organiques ;
- Les sels trop solubles dans l'eau rendent les encres trop hydrophiles et réduisent la tenue à l'eau des encres ;
- Certains cations comme l'ion ammonium sont volatils et disparaissent progressivement lors de la recirculation de l'encre dans les imprimantes de type jet continu. Il en est de même pour certains acétates et formiates ;
- Les cations de type tétra-alkyl ammonium ont une masse moléculaire importante, et de ce fait une efficacité par unité de masse relativement réduite. Ceux dont la masse moléculaire est la plus faible sont difficilement solubles dans les cétones, et d'un prix très élevé ;
- Même si certains sels sont très dissociés dans le milieu, leur limite de solubilité peut être faible et les risques de précipitation importants ;
- Les amines comme celles qui sont ajoutées pour limiter la corrosion apportée par certains sels sont des produits qui réagissent lentement avec les cétones et sont donc détruites. Elles ne sont pas utilisables dans les formulations d'encre à base de solvants cétoniques sans risques de réactions parasites ;
- Les sels inorganiques, en général facilement dissociables, sont peu compatibles avec les liants et autres ingrédients organiques.

Le solvant de ces encres est constitué le plus fréquemment d'un mélange comprenant, d'une part, une quantité majoritaire de solvants volatils et peu visqueux, afin de permettre le séchage très rapide des marquages et d'ajuster la viscosité à la valeur souhaitée, par exemple de 2 à 10 mPa.s et, d'autre part, des solvants plus visqueux et moins volatils à séchage plus lent, en une quantité moindre, pour éviter le séchage de l'encre dans la buse lors des phases d'arrêt de l'appareil d'impression (cf brevets ou demandes de brevets US-A-4 155 767, WO-A-92 14794, WO-A-92 14 795 et US-A-4 260 531).

Les solvants volatils utilisés le plus souvent sont les alcools, les cétones ou les esters de bas poids moléculaire, comme cela est indiqué dans les brevets US-A-4 567 213, et US-A-5 637 139. Parmi ces solvants, on peut citer essentiellement le méthanol, l'éthanol, le 1- et le 2-propanol, l'acétone, la méthyl éthyl cétone (« MEK »), et la méthyl-isobutyl cétone.

Les solvants moins volatils ayant notamment une fonction de retardateur de séchage sont le plus souvent les cétones, telles que la cyclohexanone, les éthers de glycol, cités dans les documents US-A-4 024 096 et US-A-4 567 213, les éthers et les acétals, tels que le furanne ou le dioxanne, mentionnés dans le document US-A-4 155 767, le diméthyl formamide ou le diméthylsulfoxyde (US-A-4 155 895), les lactones (EP-A-0 034 881), la N-méthyl pyrrolidone (EP-A-0 735 120), les glycols (WO-A-96 23 844), et même des hydrocarbures aliphatiques (US-A-4 166 044) ou encore l'eau, seule ou en combinaison avec d'autres solvants, cités plus haut, on se référera, à ce propos, aux documents US-A-4 153 593, GB-A-2 277 094 et FR-A-2 460 982.

De manière générale, les solvants principaux ou majoritaires des encres pour la projection par jet continu dévié doivent répondre à un certain nombre de critères, en particulier :
- leur volatilité doit être suffisante pour que l'encre sèche rapidement sur le support à marquer, mais pas trop grande, afin de ne pas s'évaporer trop vite dans l'imprimante, en particulier lors des phases d'arrêt ;
- leur pouvoir solvant, vis-à-vis des liants de l'encre, des colorants ou des dispersions pigmentaires et vis-à-vis des supports à imprimer, doit permettre de conférer à l'encre sèche, une bonne adhérence ;
- leur effet sur la santé des personnes, à savoir leurs toxicité, nocivité, caractère irritant et inflammabilité, doivent être réduits ;
- ils doivent permettre de maintenir stérile une encre éventuellement destinée à être ingérée ;
- enfin, et il s'agit là d'un critère essentiel auquel doivent répondre les solvants majoritaires ou principaux (et aussi les solvants minoritaires, dans une moindre mesure), ils doivent avoir la capacité de maintenir dissociées les espèces ioniques telles que les sels qui confèrent à l'encre sa conductivité électrique.

Afin de satisfaire cet important, dernier, critère, tous les solvants (majoritaires cités plus haut) sont des solvants polaires et dissociants pour les espèces ioniques telles que les sels, et en particulier la constante diélectrique de ces solvants est supérieure ou égale à 15.

Lorsque des solvants non dissociants sont utilisés majoritairement, ils ne le sont jamais seuls mais en combinaison avec un autre solvant très dissociant. Ainsi, le brevet US-A-4 210 566 présente une encre à base majoritairement d'acétate de n-propyle, mais contenant aussi un solvant comme le méthyl cellosolve, le diméthyl formamide, la 2,4-pentanedione et un alcool qui sont tous des solvants très dissociants pour les sels.

L'acétate de n-propyle a en effet une constante diélectrique de 6,3 alors que le méthyl cellosolve, le diméthyl formamide et la 2,4-pentanedione ont des constantes diélectriques respectivement de 16, 36,7 et 25.

Les formulations d'encres pour jet d'encre continu dévié sont donc limitées à l'utilisation de solvants très dissociants pour les espèces ioniques et qui ont donc des constantes diélectriques supérieures à environ 15.

Les solvants les plus dissociants couramment utilisés dans ces formulations d'encre sont :
- l'eau (de constante diélectrique 78), mais sa très faible vitesse d'évaporation limite son utilisation à l'impression sur les supports poreux ;
- les alcools comme :
   - le méthanol (de constante diélectrique 32,6) mais sa forte toxicité et son faible pouvoir solvant des liants sont des limites importantes,
   - l'éthanol (de constante diélectrique 24,3), mais sa dénaturation est une contrainte administrative dans tous les pays, il n'est en outre pas suffisamment volatil et son pouvoir solvant des liants n'est pas assez important ;
- Les cétones comme :
   - la méthyléthyl-cétone (« MEK ») (de constante diélectrique 18,5) mais elle est irritante, odorante - son odeur la rendant de moins en moins acceptable par les utilisateurs - et inflammable avec un point éclair de -9°C, de plus elle est même proscrite par les réglementations de certains pays ;
   - l'acétone (de constante diélectrique 20,7) est très volatile avec un point éclair très bas (-18°C) et inflammable, et ne peut raisonnablement être utilisée qu'en ambiance froide ;
- les autres alcools ou cétones de masse moléculaire plus élevées satisfaisant aux conditions de constante diélectrique supérieure à 15, sont moins volatils et limitent leurs utilisations aux applications où la vitesse d'évaporation de l'encre peut être faible.

Il ressort de ce qui précède qu'aucun des solvants, dits principaux ou majoritaires, actuellement mis en oeuvre couramment dans les encres pour impression par jet continu, ne remplit simultanément l'ensemble des critères mentionnés ci-dessus.

Notamment, aucun des solvants satisfaisant à la condition impérative, relative à la capacité de dissocier les espèces ioniques, exprimée par une constante diélectrique supérieure à 15, ne remplit en outre tous les autres critères énoncés plus haut.

L'obligation pour le solvant de remplir obligatoirement le critère concernant le caractère dissociant limite grandement le choix des solvants possibles dans les compositions d'encre pour l'impression par jet continu dévié et conduit en fait, par défaut, à utiliser des solvants dont de nombreuses autres propriétés ne sont pas satisfaisantes.

De même, d'autres solvants dont le pouvoir dissociant est trop faible au regard de leur constante diélectrique peu élevée, et qui répondraient aux autres exigences, par exemple en matière de solubilité et de pouvoir solvant à l'égard des liants, ne peuvent être utilisés dans les compositions d'encre pour l'impression par jet continu dévié.

Il existe donc un besoin non satisfait pour une composition d'encre convenant, en particulier pour l'impression par jet continu dévié, dans laquelle on puisse mettre en oeuvre une grande variété de solvants afin d'obtenir simultanément la conductivité électrique voulue, ainsi que toutes les autres propriétés souhaitées, tandis que soient satisfaites les exigences, en particulier, réglementaires en matière de toxicité, d'inflammabilité et de protection de l'environnement.

Il serait en outre intéressant de disposer d'une composition d'encre dans laquelle, la condition de conductivité étant satisfaite, un très grand nombre de solvants puisse être utilisé, afin que les propriétés de l'encre en relation avec les propriétés de ces solvants telles que la volatilité et le pouvoir solvant, vis-à-vis des liants, puissent être adaptés à volonté, sans limitation.

Il serait en outre intéressant de disposer d'un solvant qui permette de dissoudre les colorants et autres ingrédients insuffisamment solubles dans les solvants habituels cités plus haut et qui peuvent conférer à l'encre des propriétés nouvelles.

Il existe encore un besoin pour une encre convenant en particulier pour l'impression par jet d'encre continu dévié qui permette le marquage rapide de tous types d'objets aux caractéristiques de surfaces différentes, aussi bien poreux que non poreux.

L'encre doit, en outre, donner un marquage qui présente une bonne adhérence et une bonne résistance aux agressions chimiques et, de manière générale, présenter toutes les propriétés habituellement requises des encres pour les imprimantes à jet d'encre, notamment pour les imprimantes utilisant la technique du jet continu : viscosité, résistivité, etc.

L'encre doit, de plus, permettre le marquage à grande vitesse, d'objets même faiblement poreux en donnant toujours une impression d'excellente qualité.

Le but de l'invention est donc de fournir une composition d'encre convenant, en particulier, pour l'impression par jet continu dévié, qui répond, entre autres, à l'ensemble des besoins indiqués plus haut, qui satisfait aux critères et exigences mentionnés ci-dessus, et qui ne présente pas les inconvénients, limitations, défauts et désavantages des compositions d'encre de l'art antérieur, et qui surmonte les problèmes des compositions de l'art antérieur liés, en particulier, à la nature du solvant qu'elles contiennent.

Ce but et d'autres encore sont atteints, conformément à l'invention, par une composition d'encre pour l'impression par jet continu dévié, liquide à la température ambiante, comprenant :
a) - un solvant comprenant une majorité, en % en poids, par rapport au poids total du solvant, d'un ou plusieurs composé(s) solvant(s) dont la constante diélectrique est inférieure à 15, ledit solvant représentant au moins 10% du poids total de la composition d'encre ;
b) - au moins un composé non coloré susceptible d'être dissocié en au moins un anion et au moins un cation, ledit composé représentant au moins 0,1%, de préférence de 0,1 à 20%, de préférence encore de 0,1 à 10%, mieux de 0,1 à 5% en poids du poids total de la composition d'encre ;
c) - au moins un composé complexant dudit cation ou dudit anion, représentant au moins 0,1% en poids du poids total de la composition d'encre.

Par température ambiante, on entend généralement une température de 5 à 30°C, de préférence de 10 à 25°C, de préférence encore de 15 à 24°C, mieux de 20 à 23°C. Il est bien entendu que l'encre est liquide à la pression atmosphérique.

Avantageusement, ledit au moins un composé non coloré susceptible d'être dissocié en au moins un cation et au moins un anion est choisi parmi les sels de conductivité.

Avantageusement, la composition d'encre peut comprendre, en outre :
- d) un ou plusieurs colorants et/ou pigments,
- e) un liant.

Le ou lesdits colorants et/ou pigments peuvent être choisis parmi les colorants et/ou pigments susceptibles d'être dissociés en au moins un anion et au moins un cation ; et/ou les colorants et/ou pigments qui ne sont pas susceptibles d'être dissociés en au moins un anion et au moins un cation.

De préférence, la composition d'encre selon l'invention comprend au moins un colorant et/ou pigment susceptible d'être dissocié en au moins un anion et au moins un cation et éventuellement un colorant et/ou un pigment qui n'est pas susceptible d'être dissocié en au moins un anion et au moins un cation.

Avantageusement, ledit composé complexant est choisi parmi les composés complexants des cations tels que les éthers diméthyliques des polyéthylène glycols appelés aussi glymes, les éthers diméthyliques du propylène glycol et des polypropylène glycols, les éthers couronnes, les lariats, les cryptands, les sphérands, les hémisphérands, les cyclodextrines, et leurs mélanges.

La composition d'encre selon l'invention se distingue fondamentalement des compositions d'encre de l'art antérieur en ce qu'elle contient au moins un composé complexant, de préférence un composé complexant des cations, en une proportion d'au moins 0,10% en poids du poids total de la composition.

L'incorporation de tels composés complexants dans des compositions d'encre en particulier dans les compositions d'encre pour l'impression par jet continu dévié n'est ni décrite, ni suggérée dans l'art antérieur.

Les composés complexants sont des composés connus qui sont mis en oeuvre notamment pour complexer certains ions utilisés principalement comme catalyseur de transfert de phase en chimie organique. Il s'agit d'un domaine très éloigné de celui des compositions d'encre.

De manière surprenante, selon l'invention, il a été constaté que les composés en particulier non colorés susceptibles d'être dissociés en un au moins un cation et au moins un anion - composés que l'on dénomme généralement sels - se trouvant dans la composition d'encre, ont une solubilité accrue en présence de composés complexants. En particulier, de manière tout à fait inattendue, des sels tels que les sels de lithium, de sodium et de potassium, qui ne sont que peu solubles dans certains composés solvants de faible constante diélectrique - à savoir généralement inférieure à environ 15 - ont une solubilité très accrue en présence de ces composés complexants.

Lesdits composés complexants contribuent, de manière tout à fait surprenante, à augmenter la conductivité des encres projetables par jet d'encre de type continu dévié, même dans des composés solvants réputés non dissociants dont la constante diélectrique est inférieure à environ 15.

L'incorporation de composés complexants dans les compositions d'encre selon l'invention, permet de s'affranchir, pour le choix des composés solvants de ces compositions d'encre, de la contrainte imposée sur leur constante diélectrique inférieure à 15.

De ce fait, les composés solvants inclus dans les compositions d'encre selon l'invention peuvent être choisis sans aucune limite parmi tous les composés solvants disponibles, ce qui permet d'obtenir pour l'encre des combinaisons de propriétés optimales qu'il n'était jusqu'alors pas possible d'obtenir avec les encres de l'art antérieur dans lesquelles on ne pouvait utiliser qu'un nombre très limité de composés solvants. Par exemple, on peut, sans être gêné par la contrainte d'un fort pouvoir dissociant pour les sels, choisir les solvants afin d'amener une ou plusieurs propriétés avantageuses telles que la volatilité, et le pouvoir solvant vis-à-vis des liants.

En d'autres termes, l'incorporation de composés complexants dans les encres selon l'invention permet de formuler des encres avec des composés solvants infiniment plus variés que ceux utilisés jusqu'alors, ce qui permet à celui qui formule l'encre de disposer d'une quasi-infinité de choix parmi ces composés solvants pour communiquer à l'encre toutes les propriétés souhaitées sans qu'aucune contrainte ne vienne limiter ce choix.

Il est à noter que l'augmentation de la solubilité des sels et de la conductivité de l'encre dues aux complexants incorporés dans les compositions d'encre selon l'invention n'est absolument pas limitée aux composés solvants dissociants mais est au contraire d'application générale.

On observe, en effet, également, ces augmentations de solubilité et de conductivité dans des solvants dissociants, tels que par exemple la méthyléthylcétone, mais généralement avec une augmentation relative moindre.

Le terme composé complexant est un terme bien connu de l'homme du métier et ne sera pas défini plus précisément. Le terme composé complexant inclut aussi les composés dits séquestrants, ligands ou chélatants.

Le composé complexant est choisi généralement parmi les éthers diméthyliques des polyéthylène glycols aussi appelés glymes, les éthers diméthyliques du propylène glycol et des polypropylène glycols, les éthers couronnes, les lariats, les cryptands, les sphérands, les hémisphérands, les cyclodextrines et leurs mélanges.

Parmi les glymes, les éthers de plus bas de masse moléculaire sont des produits nocifs, voire toxiques, comme le diméthyl éther de l'éthylène glycol. Ils sont donc de préférence à proscrire pour une raison évidente de protection des utilisateurs.

Les glymes à partir du tétraéthylène glycol sont des solvants peu volatils et non nocifs ni irritants. On utilisera donc de préférence des glymes de masse égale ou supérieure à celle du tétraglyme (éther diméthylique du tétraéthylène glycol).

Parmi les éthers diméthyliques du propylène glycol et des polypropylène glycols, on choisit de préférence les éthers de masse moléculaire égale ou supérieure à celle du tétrapropylène glycol.

Les éthers couronnes sont des composés cycliques qui comprennent généralement des enchaînements de groupements CH₂-CH₂-O.

La nomenclature des éthers couronnes répond aux règles suivantes :

On écrit entre crochet le nombre total d'atomes qui forment le cycle (hors groupements supplémentaires) suivi de la dénomination éther (ou Crown). On définit ensuite le nombre d'atomes, d'oxygène ou d'azote, éléments de ce cycle. Les groupements périphériques et les atomes qui se substituent aux oxygènes initiaux du cycle sont placés préalablement.

Les éthers couronnes et leur complexe sont également appelés respectivement coronands et coronates.

Les éthers couronnes qui sont inclus dans la composition d'encre selon l'invention sont généralement choisis parmi le 1,4,7,10-Tetraoxacyclododecane appelé aussi 12-crown 4, le 1,4,7,10,13-Pentaoxacyclopentadecane ou 15-Crown-5, le 1,4,7,10,13,16-Hexaoxacyclooctadecane ou 18-crown-6, le benzo-12-crown-4, le benzo-15 crown-5, le benzo-18-crown-6, le poly dibenzo-18-crown-6, le cyclohexano 15-crown-5, le cyclohexano 18-crown-6, le dibenzo-15-Crown-5, le dibenzo-18-Crown-6, le dibenzo-21-Crown-7, le dibenzo-24-Crown-8, le dibenzo-30-Crown-10, le dicyclohexano 18-crown-6, le 2-hydroxyméthyl 12-Crown-4, le 2-hydroxyméthyl 15-Crown-5, le 2-hydroxyméthyl 18-Crown-6, le 7,16-Dibenzyl-1,4,10,13-tetraoxa-7,16-diazacyclooctadecane., le 1,4,10-Trioxa-7,13-diazacyclopentadecane, le 4'-Aminobenzo-15-crown-5, le 4'-Aminobenzo-18-crown-6, le 4'-Aminodibenzo-18-crown-6, le 2-Aminomethyl-15-crown-5, le 2-Aminomethyl-18-crown-6, le 4'-Amino-5'-nitrobenzo-15-crown-5, le 1-Aza-12-crown-4, et leurs mélanges.

Les lariats sont des dérivés des éthers couronnes dans lesquels un (dans le cas d'un lariat monobracchial) ou deux (dans le cas d'un lariat dibracchial) des oxygènes du cycle ont été remplacés par des atomes d'azote à partir desquels « une corde » (lariat vient de « rope » ; corde, et de « tie » : cravate, en anglais) s'élève au-dessus du cycle. Ce bras est un groupement chimique qui peut contenir un ou plusieurs atomes susceptibles d'augmenter l'indice de complexation de l'ion.

Les cryptands sont des molécules formées de trois chaînes, reliées entre elles par deux atomes d'azote à leurs extrémités. Cette structure permet une vraie stabilisation tridimensionnelle du cation qui se retrouve totalement isolé.

La nomenclature des cryptands est différente de celle des éthers couronnes du fait que l'on décrit entre crochets, séparés par des points, le nombre d'atome susceptible de stabiliser un ion, de chaque chaîne. On fait succéder aux crochets la dénomination cryptand. Il faut noter qu'il a été proposé la dénomination de cryptate pour les complexes dont ils sont la base.

Les cryptands incluent aussi les cryptands ditropiques qui sont des molécules formées de deux couronnes reliées entre elles par deux ponts. Ces ligands sont capables de complexer deux cations grâce à leurs deux couronnes.

Les sphérands sont des composés structurellement proches des éthers couronnes mais qui ne présentent pas les mêmes propriétés de malléabilité ; au contraire ils font preuve d'une très grande rigidité due aux groupements méthoxy.

Les hémisphérands sont apparentés aux sphérands mais possédant moitié moins de groupes méthoxy, d'où une moindre rigidité que les sphérands.

Les cryptands sont choisis de préférence parmi le 4,7,13,16,21,24-Hexaoxa-1,10-diazabicyclo[8.8.8]hexacosane appelé aussi Cryptand 222, le 4,7,13,16,21-Pentaoxa-1,10-diazabicyclo[8.8.5]tricosane appelé aussi Cryptand 221, le 4,7,13,18-Tetraoxa-1,10-diazabicyclo[8.5.5]eicosane appelé aussi Cryptand 211, et leurs mélanges. Les cyclodextrines sont choisies de préférence parmi les α-,β- ou γ-cyclodxtrines, leurs dérivés et leurs mélanges.
Les cyclodextrines sont des polyglucoses cycliques constitués par l'assemblage de motifs de glucose. L'α-cyclodextrine est constituée de 6 motifs de glucose, la β-cyclodextrines de 7 motifs et la γ-cyclodextrine de 8 motifs. Elles sont produites par l'action d'une enzyme spécifique sur l'amidon. Elles se caractérisent par une structure « en couronne » présentant :
- à l'extérieur, des hydroxyles conférant un caractère hydrophile,
- et dans la partie interne, une cavité hydrophobe.

Au contraire des compositions de l'art antérieur, la composition d'encre selon l'invention contient une très faible quantité d'eau inférieure généralement à 10% en poids, de préférence inférieure à 5%, de préférence encore, inférieure à 1% en poids par rapport au poids total de l'encre.

La composition d'encre selon l'invention peut même être considérée comme étant essentiellement exempte d'eau (0% d'eau).

En fait, l'eau présente n'est que l'eau apportée se trouvant à titre d'impureté dans les divers composants de l'encre. Plus le degré de pureté des composants choisis sera grand, plus la teneur en eau sera faible.

La faible teneur ou absence d'eau dans la composition d'encre selon l'invention favorise la formation du film d'encre lorsque les liants et autres colorants de la composition sont insolubles dans l'eau, améliorant ainsi les propriétés de résistance et d'adhérence de l'encre.

Dans la composition selon l'invention, le solvant représente généralement au moins 10% en poids du poids total de la composition d'encre, de préférence le solvant représente de 30 à 90% en poids, de préférence encore de 60 à 80% en poids du poids total de la composition d'encre.

Le solvant comprend un ou plusieurs composés solvant(s) organique(s) et éventuellement de l'eau à la condition que la quantité d'eau respecte les conditions indiquées plus haut.

Grâce à la présence dans la composition d'encre selon l'invention d'un agent complexant, de préférence d'un agent complexant des cations, il n'existe aucune limitation sur la nature du ou des composés solvant(s) qui peuvent être utilisés. Tout composé solvant peut être utilisé quel que soit son pouvoir dissociant pour les paires d'ions, à condition que le solvant comprenne une majorité, en % en poids, par rapport au poids total du solvant, d'un ou plusieurs composé(s) solvant(s) dont la constante diélectrique est inférieure à 15.

Le ou lesdits composés solvant(s) organique(s) faisant partie du solvant est(sont) choisi(s), par exemple, parmi les alcools, en particulier, les alcools de bas poids moléculaire, par exemple, les alcools aliphatiques ; les cétones de préférence de bas poids moléculaire ; les éthers d'alkylènes glycol ; les esters d'alkylène glycols et les esters d'éthers d'alkylène glycols, tels que les acétates ; le diméthyl formamide ; la N-méthyl pyrrolidone ; les acétals ; les esters ; les éthers linéaires ou cycliques ; les hydrocarbures aliphatiques, cycliques ou non, par exemple linéaires ou ramifiés ; les hydrocarbures aromatiques ou non ; et les carbonates tels que le carbonate de propylène, le carbonate d'éthylène et les diméthyl- et diéthyl-carbonates ; et leurs mélanges.

De préférence, ce ou ces composés solvant(s) possède(nt) la propriété de dissoudre les autres ingrédients de l'encre, notamment le liant, les matières colorantes, les additifs, etc.

Les alcools seront, de préférence, choisis parmi les alcools aliphatiques linéaires ou ramifiés de 1 à 8 atomes de carbone, tels que le méthanol, l'éthanol, le propanol-1, le propanol-2, le n-butanol, le butanol-2, le tert-butanol, etc.

Les cétones seront, de préférence, choisies parmi les cétones de 3 à 10 atomes de carbone, telles que l'acétone, la butanone (méthyl-éthyl-cétone), la pentanone-2 (méthyl-propyl-cétone), la méthyl-3 butanone-2 (méthyl-isopropyl cétone) et la méthyl-4 pentanone-2 (méthyl-isobutyl-cétone).

Les éthers d'alkylène glycol sont choisis de préférence parmi les éthers monoalkyliques (groupe alkyle en C1 à C6) ou dialkylique (groupes alkyle en C1 à C6) d'alkylènes glycols comprenant 1 à 10 atomes de carbone dans la chaîne alkylène, de préférence il s'agit d'éthers d'éthylène ou de propylène glycol, tels que le méthoxy-propanol.

Les esters de glycol et les esters d'éthers de glycol sont choisis, de préférence, parmi les esters de ceux-ci avec les acides carboxyliques, aliphatiques saturés de 1 à 6 atomes de carbone, tels que l'acide formique, l'acide acétique, l'acide propionique, l'acide butyrique, l'acide valérique et l'acide caproïque.

On peut citer, par exemple, l'acétate de méthoxypropyle, l'acétate de butyldiglycol, etc..

Les esters sont choisis, de préférence, parmi les ésters de faible masse moléculaire tels que les formiates, les acétates, les propionates ou butyrates d'alcools de 1 à 10 carbones

Les acétals sont choisis, de préférence, parmi les acétals de faible masse moléculaire tels que l'éthylal et le méthylal

Les éthers sont choisis, de préférence, parmi les éthers de faible masse moléculaire comme le dioxolanne ou le tetrahydrofuranne

Selon l'invention, le solvant comprend une majorité en % en poids par rapport au poids total du solvant d'un ou plusieurs composés solvant(s) dont la constante diélectrique est inférieure à 15, tels que le dioxolanne, l'acétate d'éthyle ou l'acétate d'isopropyle.

L'homme du métier pourra facilement identifier parmi tous les composés solvants cités dans la présente description y compris dans la description de l'art antérieur les composés solvants remplissant la condition relative à la constante diélectrique mentionnée plus haut.

Par majorité, on entend que le % en poids du ou desdits composés solvant(s) est de 50% ou plus du poids total du solvant, de préférence de 60 % ou plus, de préférence encore de 70% ou plus.

Grâce au composé complexant inclus dans les compositions d'encre de l'invention, il est possible pour la première fois de formuler des compositions d'encre pour l'impression par jet continu dévié dont le solvant est constitué en majorité de composé(s) solvant(s) de faible constante diélectrique, peu dissociants, ce qui était impossible et proscrit dans l'art antérieur.

De ce fait, on peut, avec les compositions d'encre selon l'invention mettre à profit toutes les propriétés intéressantes de tels solvants que l'on ne pouvait auparavant pas exploiter, puisque les solvants des compositions d'encre étaient obligatoirement constituées en majorité par des composés solvants de constante diélectrique supérieure à 15.

La composition d'encre selon l'invention peut comprendre également un liant comprenant un ou plusieurs polymère(s) et/ou résine(s).

Ce(s) polymère(s) et/ou résine(s) est (sont) choisi(s), de préférence, parmi les résines (méth) acryliques, vinyliques, cétoniques, phénoliques, cellulosiques, styréniques, époxy, les polyuréthanes, les styrène-acrylates et les combinaisons de deux ou plus de ceux-ci.

Des exemples de ces résines sont les suivants :

Pour les résines acryliques, méthacryliques et styrène-acrylates, les Joncryl^{®} de la Société JOHNSON POLYMER, les Acryloid^{®} de la Société ROHM & HAAS, les SMA^{®} de la Société ATOCHEM ou les Neocryl^{®} de ZENECA.

Pour les résines vinyliques, les Hostaflex^{®} de la Société VIANOVA, les Vinylite^{®} de UNION CARBIDE ou les Vinnol^{®} de WACKER.

Pour les résines cétoniques, les produits proposés par les Sociétés HULS et BASF, tels que les résines dites AP et SK de HULS et les résines LAROPAL^{®} de BASF.

Pour les résines phénoliques, les produits proposés par la Société VIANOVA sous la dénomination ALNOVOL^{®}.

Parmi les résines cellulosiques, comme les nitrocelluloses, les éthylcelluloses, les acéto-propionates ou acétobutyrates de cellulose, on peut citer, par exemple, les produits proposés par les Sociétés Aqualon ou EASTMAN.

Parmi les résines époxy, on peut citer les Epikote^{®} proposés par la Société SHELL ou les Araldite de CIBA.

Parmi les polyuréthanes, on peut citer les Surkopak^{®} de la Société MITCHANOL.

La proportion de liant dans la composition d'encre selon l'invention est généralement de 0,1 à 30% en poids, de préférence de 1 à 25% en poids, de préférence encore de 3 à 20% en poids.

La composition d'encre peut, en outre, comprendre un ou plusieurs plastifiant(s) (de la ou des résine(s) ou polymère(s) du liant) choisi(s), par exemple, parmi les plastifiants connus de l'homme du métier et choisis en fonction du liant utilisé comprenant un ou plusieurs polymère(s) et/ou résine(s), on peut citer, en tant que plastifiant, par exemple, les polyuréthanes thermoplastiques.

Grâce à la grande variété de choix de solvants possibles avec les compositions de l'invention, on peut incorporer facilement de tels composés plastifiants dans la composition de l'invention en choisissant le ou les solvants convenables.

Le ou les plastifiant(s) est(sont) généralement présent(s) à raison de 0,1 à 20% en poids.

Selon l'invention, la composition d'encre comprend au moins un composé non coloré susceptible d'être dissocié en au moins un anion et au moins un cation. Ledit (lesdits) composé(s) non coloré(s) est (sont) choisi(s) de préférence parmi les sels de conductivité, mais le composé non coloré susceptible d'être dissocié peut être aussi choisi parmi tous les autres composés répondant à cette condition et pouvant rentrer dans la composition d'encre, tels que les agents anti-corrosion. L'encre pourra contenir toute combinaison de ces composés non colorés : par exemple un sel de conductivité et un agent anti-corrosion.

En outre la composition d'encre peut comprendre un ou plusieurs colorants et pigments.

Ces colorants et/ou pigments peuvent être choisis parmi les colorants et/ou pigments qui sont susceptibles d'être dissociés en au moins un anion et au moins cation, et/ou parmi les colorants et/ou pigments qui ne sont pas susceptibles d'être dissociés en au moins un anion et au moins un cation.

Le ou les colorant(s) et/ou pigment(s) peut(vent) être choisi(s) parmi tous les colorants ou pigments convenant à l'usage recherché, connus de l'homme du métier, certains de ces pigments ou colorants ont déjà été cités plus haut notamment dans le cadre de la description de l'art antérieur.

Parmi ces colorants et/ou pigments, l'homme du métier identifiera facilement ceux qui sont susceptibles d'être dissociés ceux qui ne sont pas susceptibles d'être dissociés.

On choisira généralement les colorants et pigments parmi les colorants et pigments connus sous la dénomination de « C. I. Solvent Dyes » et « C. I. Pigments ».

A titre d'exemple, des pigments et colorants les plus courants, on peut citer les C. I. Solvent Black 29, C. I. Solvent Black 7, C. I. Solvent Black 28, C. I. Solvent Black 35, C. I. Solvent Blue 70, C. I. Solvent Red 124, les dispersions de Pigment Blue 60 ou de Pigment Blue 15.

La quantité totale de colorant(s) et/ou de pigment(s) (incluant aussi bien les colorants et pigments susceptibles d'être dissociés, que les colorants et/ou pigments qui ne sont pas susceptibles d'être dissociés) est généralement de 0,05 à 25% en poids, de préférence, de 1 à 20%, de préférence encore de 3 à 10% de la composition.

De nouveau, grâce à la grande variété de solvants qui peuvent être inclus dans la composition d'encre selon l'invention, il est possible de choisir ces solvants afin qu'ils puissent dissoudre le ou les colorant(s) et en particulier les colorants les plus résistants à l'eau, en quantité plus importante que les solvants habituels, il est notamment possible, dans le cas d'un colorant fluorescent, d'obtenir des encres particulièrement fluorescentes, c'est-à-dire visibles sous un faible éclairement UV.

La composition selon l'invention doit, en outre, généralement, comprendre au moins un sel de conductivité, sauf si un autre ingrédient non coloré est lui même un sel pouvant apporter la conductivité lorsqu'il est dissocié.

En effet, l'encre selon l'invention étant applicable par jet continu, elle doit avoir une conductivité électrique suffisante généralement supérieure à 300 µS/cm à 20°C, de préférence, de l'ordre de 500 à 2 000 µS/cm (à 20°C), ou plus.

Le composé complexant favorise la conductivité, en aidant, par la complexation à la dissociation des ions contenus dans l'encre et de ce fait les quantités de sels de conductivité (voir plus loin) peuvent être réduites.

Les produits apportant à l'encre la conductivité nécessaire à la projection par jet continu sont des composés ionisables, des composés susceptibles d'être dissociés en au moins un cation et au moins un anion, tels que les sels.

Selon l'invention l'encre contient au moins un composé (b) non coloré susceptible d'être dissocié en au moins un cation et au moins un anion. Les colorants ou d'autres composés, déjà présents dans l'encre, peuvent ainsi apporter de la conductivité à celle-ci en plus du composé non coloré susceptible d'être dissocié cité plus haut. En ce qui concerne les colorants : c'est le cas des composés connus sous la dénomination « C. I. Solvent Black 27, 29, 35 et 45 », déjà cités.

Ledit composé non coloré susceptible d'être dissocié en au moins un anion et au moins un cation est généralement choisi parmi les sels de conductivité différents des colorants et des autres composés susceptibles d'être dissociés, et est généralement choisi parmi les sels de métaux alcalins tels que le lithium, le sodium, le potassium, les sels de métaux alcalino-terreux tels que le magnésium et le calcium et les sels d'ammoniums simples ou quaternaires ; sous forme d'halogénures (chlorures, bromures, iodures, fluorures), de perchlorates, de nitrates, thiocyanates, formiates, acétates, sulfates, propionates, trifluoroacétates, triflates (trifluorométhane sulfonates), hexafluorophosphates, hexafluoroantimonates, tétrafluoroborates, picrates, carboxylates, et sulfonates. On pourra également se reporter à la liste de ces composés déjà donnée dans le cadre de la description de l'art antérieur en relation avec les documents qui y sont cités.

Ces sels de conductivité seront donc présents, si nécessaire, (si le composé non coloré qui serait alors autre qu'un sel de conductivité déjà présent dans l'encre n'apporterait pas avec les autres composés éventuels susceptibles d'être dissociés la conductivité voulue) dans la composition d'encre de manière à communiquer à l'encre la conductivité ci-dessus : de préférence, leur quantité est de 0,1 à 20% en poids, de préférence, encore de 0,1 à 10% en poids et mieux de 0,1 à 5% en poids.

Le rapport molaire entre le ou les composés susceptible(s) d'être dissocié (s) quels qu'ils soient : (à savoir de préférence le ou les colorant(s) susceptible(s) d'être dissocié(s) et/ou le ou les sel(s) de conductivité), et le ou les composé(s) complexant(s) est généralement de 0,1 à 10, de préférence de 0,5 à 2.

Il a été constaté, toutefois que l'augmentation de la solubilité et de la conductivité étaient maximales lorsque le nombre de moles du ou des composé(s) susceptible(s) d'être dissocié(s) (par exemple du sel de conductivité) et le ou les composé(s) complexant(s) étaient égaux ou très voisins.

La composition selon l'invention peut, en outre, comprendre un ou plusieurs additifs choisis parmi les composés qui améliorent la solubilité de certains de ces composants, la qualité d'impression, l'adhérence, ou encore le contrôle du mouillage de l'encre sur différents supports.

Le ou les additif (s) pourra (pourront) être choisi(s), par exemple, parmi les agents antimousse, les stabilisants chimiques, les stabilisants UV ; les agents tensio-actifs, tels que le Fluorad^{®} FC 430, les agents stabilisant la corrosion par les sels, les bactéricides, les fongicides et biocides, les tampons régulateurs de pH, etc.

Le ou les additif (s) est(sont) utilisé(s) à des doses très faibles, en général inférieures ou égales à 5% et parfois aussi faibles que 0,01%, selon qu'il s'agisse des anti-mousses, des stabilisants ou des tensio-actifs.

L'invention a également pour objet un procédé de marquage d'objets, par exemple, poreux ou non poreux, par projection sur des objets d'une composition d'encre, telle qu'elle a été décrite ci-dessus. Le marquage s'effectue par la technique du jet continu dévié.

L'invention a encore pour objet un substrat ou support, par exemple, poreux ou non poreux, pourvu d'un marquage obtenu par le séchage de la composition d'encre, telle que décrite ci-dessus.

Ce substrat peut être en métal, par exemple, en aluminium, en acier (boîtes de boissons), en verre (bouteilles de verre), en céramique, en un matériau contenant de la cellulose tel que du papier, du carton ou du bois, en polymère synthétique (« plastique »), tels que PVC, PET, en polyoléfine, telles que polyéthylène (PE), polypropylène (PP), en « Plexiglas », ou en toute autre substance non poreuse ou poreuse ou en composite de plusieurs des matériaux précédents.

On obtient des marquages, des impressions d'excellente qualité sur tous les substrats, même très peu poreux.

L'invention sera mieux comprise à la lecture de la description suivante de modes de réalisation de l'invention, donnés à titre d'exemples illustratifs et non limitatifs.

### EXEMPLES

### EXEMPLE 1

L'acétate de potassium à 0,5% en masse n'est pas complètement soluble dans un mélange de dioxolanne et d'éthanol 90/10, et la conductivité électrique de ce mélange n'est que de 7 µS/cm.

L'ajout de 1,34% en masse d'un éther couronne comme le 11,4,7,10,13,16-Hexaoxacyclooctadecane, solubilise complètement l'acétate de potassium et augmente la conductivité jusqu'à 360 µS/cm soit une augmentation d'un facteur de plus de 50 !.

### EXEMPLE 2

L'hexafluorophosphate de potassium à 0,5% en masse dans le dioxolanne a une conductivité de 5 µS/cm.

L'ajout conformément à l'invention de 2% en masse de diméthyl éther de polyéthylène glycol de masse molaire 1000 augmente la conductivité jusqu'à plus de 300 µS/cm soit une augmentation d'un facteur 60.

### EXEMPLES 3 à 8

Les compositions d'encres suivantes selon l'invention ont été préparées en mélangeant les produits mentionnés dans le Tableau I ci-dessous dans les proportions indiquées. Les viscosités et les conductivités des encres obtenues sont également données ci-dessous.

**TABLEAU I**

| Exemples (pourcentages en masses) | Constante diélectrique | **N°3** | **N°4** | **N°5** | **N°6** | **N°7** | ***N*°8** | **N°9** |
|---|---|---|---|---|---|---|---|---|
| Ethanol 99% | 24,3 | | | **7,31** | | **4,35** | | |
| Méthyl éthyl cétone | 18,5 | | | | | | **8** | **7** |
| N-Methyl Pyrrolidone | 33 | | **4,53** | | **4,52** | **4,35** | | |
| Dioxolanne | 7,13 | **86,17** | **85;47** | **65,69** | **85,68** | **79,5** | **71,9** | **79,9** |
| Solvent black 3 | | | | | **4** | **4** | | |
| Fluorescent brightener (Uvitex OB de Ciba) | | | | | | | **1** | |
| Dispersion vinylique de Pigment Blue 60 | | | **4** | | | | | |
| Solvent Black 29 (Neozapon X55 de BASF) | | **5** | | | | | | **5** |
| Dispersion acrylique de Pigment Black 7 | | | | | **4** | | | |
| Résine acrylique (Joncryl 67 de Johnson Polymer) | | | | | | | **15** | |
| Résine vinylique (Hostaflex CM151 de Solutia) | | | **3** | | **3** | | | |
| Résine phénolique de type novolaque (Alnovol PN320 de Solutia) | | | | **20** | | | | |
| Nitrocellulose mouillée à 30% d'Isopropanol(H27 de Haguedorn) | | **6** | | | | | **5** | **6** |
| Trifluoroacétate de potassium | | **1** | | | **1** | **1** | | **1** |
| Hexafluorophosphate de Potassium | | | **1,5** | **1,5** | | | **1** | |
| Ether couronne 18Crown6 | | **1,73** | **1,4** | **1,4** | **1,7** | **1,7** | | **1** |
| PEGDME 500 | | | | | | | **3** | |
| Surfactant BYK 333 (Polyether modifié poly-dimethyl-siloxane) | | **0,1** | **0,1** | **0,1** | **0,1** | **0,1** | **0,1** | **0,1** |
| | | | | | | | | |
| Viscosité (mPa.s) | | **5,23** | **5,62** | **4,3** | **4,02** | **3,78** | **4,3** | **5,2** |
| Conductivité (mS/cm) | | **786** | **675** | **266** | **444** | **700** | **568** | **476** |

| | | | | | | | | |
|---|---|---|---|---|---|---|---|---|
| PEGDME = diméthyléther de polyéthylène glycol de masse molaire environ 500 | | | | | | | | |

Les compositions préparées selon les exemples 3 à 8 ont été filtrées sur des filtres de porosité 1 µm et donnent des encres projetables par jet d'encre.

Les encres ainsi préparées ont été testées dans des imprimantes Imaje de type Jaime 1000 Série 4 qui fonctionnent selon le principe de jet continu dévié.

Les impressions obtenues étaient toutes d'excellente qualité.

## Revendications

1. Composition d'encre pour l'impression par jet continu dévié, liquide à la température ambiante, comprenant :
a) - un solvant comprenant une majorité, en % en poids, par rapport au poids total du solvant, d'un ou plusieurs composé(s) solvant(s) dont la constante diélectrique est inférieure à 15, ledit solvant représentant au moins 10% du poids total de la composition d'encre ;
b) - au moins un composé non coloré susceptible d'être dissocié en au moins un anion et au moins un cation, ledit composé représentant au moins 0,1%, de préférence de 0,1 à 20%, de préférence encore de 0,1 à 10%, mieux de 0,1 à 5% en poids du poids total de la composition d'encre ;
c) - au moins un composé complexant dudit cation ou dudit anion, représentant au moins 0,1% en poids du poids total de la composition d'encre.

2. Composition d'encre selon la revendication 1, dans lequel ledit au moins un composé non coloré susceptible d'être dissocié est choisi parmi les sels de conductivité.

3. Composition d'encre selon l'une quelconque des revendications 1 et 2, comprenant, en outre :
- d) un ou plusieurs colorants et/ou pigment(s) ;
- e) un liant.

4. Composition selon la revendication 3, dans lequel le ou lesdits colorant(s) et/ou pigment(s) sont choisis parmi les colorants et/ou pigments susceptibles d'être dissociés en au moins un anion et au moins un cation.

5. Composition selon la revendication 3, dans lequel le ou lesdits colorant(s) sont choisis parmi les colorants et/ou pigments qui ne sont pas susceptibles d'être dissociés en au moins un anion et au moins un cation.

6. Composition d'encre selon l'une quelconque des revendications précédentes, dans laquelle ledit composé complexant est choisi parmi les éthers diméthyliques des polyéthylène glycols appelés aussi glymes, les éthers diméthyliques du propylène glycol et des polypropylène glycols, les éthers couronnes, les lariats, les cryptands, les sphérands, les hémisphérands, les cyclodextrines, et leurs mélanges.

7. Composition d'encre selon la revendication 6, dans laquelle les glymes sont choisis parmi les glymes de masse égale ou supérieure à celle du tétraglyme ou éther diméthylique du tétraéthylène glycol.

8. Composition d'encre selon la revendication 6, dans laquelle les éthers diméthyliques des polypropylène glycols sont choisis parmi les ethers de masse égale ou supérieure à celle de l'éther diméthylique du tétrapropylène glycol.

9. Composition d'encre selon la revendication 6, dans laquelle les éthers couronnes sont choisis parmi le 1,4,7,10-Tetraoxacyclododecane appelé aussi 12-crown 4, le 1,4,7,10,13-Pentaoxacyclopentadecane ou 15-Crown-5, le 1,4,7,10,13,16-Hexaoxacyclooctadecane ou 18-crown-6, le benzo-12-crown-4, le benzo-15 crown-5, le benzo-18-crown-6, le poly dibenzo-18-crown-6, le cyclohexano 15-crown-5, le cyclohexano 18-crown-6, le dibenzo-15-Crown-5, le dibenzo-15-Crown-5, le dibenzo-18-Crown-6, le dibenzo-21-Crown-7, le dibenzo-24-Crown-8, le dibenzo-30-Crown-10, le dicyclohexano 18-crown-6, le 2-hydroxyméthyl 12-Crown-4, le 2-hydroxyméthyl 15-Crown-5, le 2-hydroxyméthyl 18-Crown-6, le 7,16-Dibenzyl-1,4,10,13-tetraoxa-7,16-diazacyclooctadecane., le 1,4,10-Trioxa-7,13-diaza-cyclopentadecane, le 4'-Aminobenzo-15-crown-5, le 4'-Aminobenzo-18-crown-6, le 4'-Aminodibenzo-18-crown-6, le 2-Aminomethyl-15-crown-5, le 2-Aminomethyl-18-crown-6, le 4'-Amino-5'-nitrobenzo-15-crown-5, le 1-Aza-12-crown-4, et leurs mélanges.

10. Composition d'encre selon la revendication 6, dans laquelle les cryptands sont choisis parmi le 4,7,13,16,21,24-Hexaoxa-1,10-diazabicyclo[8.8.8]hexacosane appelé aussi Cryptand 222, le 4,7,13,16,21-Pentaoxa-1,10-diazabicyclo[8.8.5]tricosane appelé aussi Cryptand 221, le 4,7,13,18-Tetraoxa-1,10-diazabicyclo[8.5.5]eicosane appelé aussi Cryptand 211, et leurs mélanges.

11. Composition d'encre selon la revendication 6, dans laquelle les cyclodextrines sont choisies parmi les α, β, ou γ cyclodextrines, leurs dérivés et leurs mélanges.

12. Composition selon l'une quelconque des revendications précédentes, comprenant moins de 10% en poids, de préférence moins de 5% en poids, de préférence encore moins de 1% en poids, et mieux 0% en poids d'eau.

13. Composition selon l'une quelconque des revendications précédentes, dans laquelle le solvant représente de 30 à 90% en poids, de préférence de 60 à 80% en poids du poids total de la composition d'encre.

14. Composition selon l'une quelconque des revendications précédentes, dans laquelle le solvant comprend un ou plusieurs composé(s) solvant(s) organique(s) et éventuellement de l'eau.

15. Composition d'encre selon la revendication 14, dans laquelle le ou lesdits composé(s) solvant(s) organique(s) est(sont) choisi(s) parmi les alcools ; les cétones ; les éthers d'alkylènes glycols ; les esters d'alkylène glycols et les esters d'éthers d'alkylène glycols tels que les acétates ; le diméthyl formamide ; la N-méthylpyrrolidone ; les éthers ; les acétals ; les esters ; les hydrocarbures aliphatiques, cycliques ou non ; les hydrocarbures aromatiques ou non ; et les carbonates tels que le carbonate de propylène, le carbonate d'éthylène et les diméthyl et diéthyl carbonates ; et leurs mélanges.

16. Composition selon la revendication 15, dans laquelle ledit ou lesdits composé(s) solvant(s) organique (s) est (sont) choisi(s) parmi les alcools aliphatiques linéaires ou ramifiés de 1 à 8 atomes de carbone ; les cétones de 3 à 10 atomes de carbone ; les éthers monoalkyliques (groupe alkyle en C1 à C6) ou dialkyliques (groupes alkyles en C1 à C6) d'alkylènes glycols comprenant 1 à 10 atomes de carbone dans la chaîne alkylène, tels que l'éthylène glycol et le propylène glycol ; les esters d'alkylène glycols et les esters d'éthers d'alkylène glycols avec les acides carboxyliques, aliphatiques saturés de 1 à 6 atomes de carbone.

17. Composition d'encre selon l'une quelconque des revendications 3 à 16, dans laquelle le liant comprend un ou plusieurs résine (s) et/ou polymère(s).

18. Composition d'encre selon la revendication 17, dans laquelle le ou lesdites résine(s) et/ou polymère(s) est(sont) choisie(s) parmi les résines (méth)acryliques, vinyliques, cétoniques, phénoliques, cellulosiques, styréniques, époxy, les polyuréthanes, les styrène-acrylates, et les combinaisons de deux ou plus de ceux-ci.

19. Composition d'encre selon l'une quelconque des revendications 3 à 18, comprenant de 0,1 à 30% en poids, de préférence de 1 à 25% en poids, de préférence encore de 3 à 20% en poids, de liant.

20. Composition d'encre selon l'une quelconque des revendications précédentes, comprenant, en outre, un ou plusieurs plastifiant(s) à raison de 0,1 à 20% en poids.

21. Composition d'encre selon l'une quelconque des revendications 3 à 20, dans laquelle ledit ou lesdits colorant(s) et/ou pigment(s) est(sont) choisi(s) parmi les colorants et pigments connus sous la dénomination de « C. I. Solvent Dyes » et « C. I. Pigments », tels que les C. I. Solvent Black 29, C. I. Solvent Black 7, C. I. Solvent Black 28, C. I. Solvent Black 27, 35, et 45 C. I. Solvent Blue 70, C. I. Solvent Red 124, les dispersions de Pigment Blue 60 ou de Pigment Blue 15.

22. Composition selon l'une quelconque des revendications 3 à 21, comprenant de 0,05 à 25% en poids de colorant(s) et/ou pigment(s), de préférence de 1 à 20%, de préférence encore de 3 à 10% en poids.

23. Composition selon l'une quelconque des revendications 2 à 22, dans lequel le sel de conductivité représente de 0,1 à 20% en poids, de préférence de 0,1 à 10% en poids, de préférence encore de 0,1 à 5% en poids en poids total de l'encre.

24. Composition d'encre selon la revendication 23, dans laquelle ledit sel de conductivité est choisi parmi les sels de métaux alcalins, alcalino-terreux et d'ammoniums simples ou quaternaires, sous forme d'halogénures, perchlorates, nitrates, thiocyanates, formiates, acétates, sulfates, propionates, trifluoroacétates, triflates, hexafluorophosphates, hexafluoroantimonates, tétrafluoroborates, picrates, carboxylates et sulfonates.

25. Composition d'encre selon l'une quelconque des revendications précédentes qui a une conductivité supérieure à 300 µS/cm à 20°C, de préférence de 500 µS/cm à 2 000 µS/cm.

26. Composition selon l'une quelconque des revendications précédentes, dans laquelle le rapport molaire entre le sel ou les composé(s) susceptible(s) d'être dissociés et le ou les composé(s) complexant(s) est de 0,1 à 10, de préférence de 0,5 à 2.

27. Composition selon la revendication 26, dans laquelle le nombre de moles du ou des composé(s) susceptible(s) d'être dissocié(s) et du ou des composé(s) complexant(s) sont égaux ou très voisins.

28. Composition d'encre selon l'une quelconque des revendications précédentes, comprenant, en outre, un ou plusieurs additif(s) choisi(s) parmi les agents antimousse, les stabilisants chimiques, les stabilisants UV, les agents tensio-actifs, les agents inhibant la corrosion par les sels ; les bactéricides, fongicides et biocides, et les tampons régulateurs de pH.

29. Procédé de marquage d'objets par projection sur ces objets d'une encre par la technique du jet continu dévié, **caractérisée en ce que** l'encre projetée est une composition d'encre selon l'une quelconque des revendications 1 à 28.

30. Substrat **caractérisé en ce qu'**il est pourvu d'un marquage obtenu par séchage de la composition d'encre selon l'une quelconque des revendications 1 à 28.

31. Substrat selon la revendication 30, **caractérisé en ce que** le substrat est en métal, par exemple, en aluminium, en acier, en verre, en céramique, en un matériau contenant de la cellulose tel que du papier éventuellement couché ou glacé, du carton ou du bois, en polymère synthétique (« plastique »), tels que PVC, PET, en polyoléfine, telles que polyéthylène (PE), polypropylène (PP), en « Plexiglas », ou en toute autre substance non poreuse ou poreuse ou en composite de plusieurs des matériaux précédents.

## Claims

1. Ink composition for continuous deviated jet printing, which is liquid at ambient temperature, comprising:
a) - a solvent comprising a majority, as % by weight, relative to the total weight of the solvent, of one or more solvent compound(s), the dielectric constant of which is less than 15, said solvent representing at least 10% of the total weight of the ink composition;
b) - at least one noncolored compound which can be dissociated into at least one anion and at least one cation, said compound representing at least 0.1%, preferably from 0.1% to 20%, more preferably from 0.1% to 10%, better still from 0.1% to 5% by weight of the total weight of the ink composition;
c) - at least one complexing compound of said cation or said anion, representing at least 0.1% by weight of the total weight of the ink composition.

2. Ink composition according to claim 1, in which said at least one noncolored compound that can be dissociated is chosen from conductivity salts.

3. Ink composition according to either one of claims 1 and 2, further comprising:
- d) one or more dyes and/or pigments;
- e) a binder.

4. Composition according to claim 3, in which said dye(s) and/or pigment(s) is (are) chosen from dyes and/or pigments that can be dissociated into at least one anion and at least one cation.

5. Composition according to claim 3, in which said dye(s) is (are) chosen from dyes and/or pigments that cannot be dissociated into at least one anion and at least one cation.

6. Ink composition according to any one of the preceding claims, in which said complexing compound is chosen from polyethylene glycols dimethyl ethers, also called glymes, propylene glycol dimethyl ethers and polypropylene glycols dimethyl ethers, crown ethers, lariats, cryptands, spherands, hemispherands, cyclodextrins, and mixtures thereof.

7. Ink composition according to claim 6, in which the glymes are chosen from glymes of mass greater than or equal to that of tetraglyme or tetraethylene glycol dimethyl ether.

8. Ink composition according to claim 6, in which the polypropylene glycols dimethyl ethers are chosen from ethers of mass greater than or equal to that of tetrapropylene glycol dimethyl ether.

9. Ink composition according to claim 6, in which the crown ethers are chosen from 1,4,7,10-tetraoxacyclododecane, also called 12-crown-4, 1,4,7,10,13-pentaoxacyclopentadecane or 15-crown-5, 1,4,7,10,13,16-hexaoxacyclooctadecane or 18-crown-6, benzo-12-crown-4, benzo-15-crown-5, benzo-18-crown-6, polydibenzo-18-crown-6, cyclohexano-15-crown-5, cyclohexano-18-crown-6, dibenzo-15-crown-5, dibenzo-18-crown-6, dibenzo-21-crown-7, dibenzo-24-crown-8, dibenzo-30-crown-10, dicyclohexano-18-crown-6, 2-hydroxymethyl-12-crown-4, 2-hydroxymethyl-15-crown-5, 2-hydroxymethyl-18-crown-6, 7,16-dibenzyl-1,4,10,13-tetraoxa-7,16-diazacyclooctadecane, 1,4,10-trioxa-7,13-diazacyclopentadecane, 4'-aminobenzo-15-crown-5, 4'-aminobenzo-18-crown-6, 4'-aminodibenzo-18-crown-6, 2-aminomethyl-15-crown-5, 2-aminomethyl-18-crown-6, 4'-amino-5'-nitrobenzo-15-crown-5, 1-aza-12-crown-4, and mixtures thereof.

10. Ink composition according to claim 6, in which the cryptands are chosen from 4,7,13,16,21,24-hexaoxa-1,10-diazabicyclo[8.8.8]hexacosane, also called Cryptand 222, 4,7,13,16,21-pentaoxa-1,10-diazabicyclo-[8.8.5]tricosane, also called Cryptand 221, 4,7,13,18-tetraoxa-1,10-diazabicyclo[8.5.5]eicosane, also called Cryptand 211, and mixtures thereof.

11. Ink composition according to claim 6, in which the cyclodextrins are chosen from α-, β-, or γ-cyclodextrins, derivatives thereof and mixtures thereof.

12. Composition according to any one of the preceding claims, comprising less than 10% by weight, preferably less than 5% by weight, more preferably less than 1% by weight, and better still 0% by weight of water.

13. Composition according to any one of the preceding claims, in which the solvent represents from 30% to 90% by weight, preferably from 60% to 80% by weight of the total weight of the ink composition.

14. Composition according to any one of the preceding claims, in which the solvent comprises one or more organic solvent compound(s) and, optionally, water.

15. Ink composition according to claim 14, in which said organic solvent compound(s) is (are) chosen from alcohols; ketones; alkylene glycols ethers; alkylene glycols esters and alkylene glycols ethers esters such as acetates; dimethylformamide; N-methylpyrrolidone; ethers; acetals; esters; cyclic or noncyclic, aliphatic hydrocarbons; aromatic or nonaromatic hydrocarbons; and carbonates such as propylene carbonate, ethylene carbonate and dimethyl and diethyl carbonates, and mixtures thereof.

16. Composition according to Claim 15, in which said organic solvent compound(s) is (are) chosen from linear or branched aliphatic alcohols containing from 1 to 8 carbon atoms; ketones containing from 3 to 10 carbon atoms; monoalkyl (C₁ to C₆ alkyl group) or dialkyl (C₁ to C₆ alkyl groups) ethers of alkylene glycols comprising 1 to 10 carbon atoms in the alkylene chain, such as ethylene glycol and propylene glycol; alkylene glycols esters and alkylene glycols ethers esters with saturated aliphatic carboxylic acids containing from 1 to 6 carbon atoms.

17. Ink composition according to any one of claims 3 to 16, in which the binder comprises one or more resin(s) and/or polymer(s).

18. Ink composition according to claim 17, in which said resin(s) and/or polymer(s) is (are) chosen from (meth)acrylic resins, vinyl resins, ketone resins, phenolic resins, cellulosic resins, styrene resins, epoxy resins, polyurethanes, styrene-acrylates, and combinations of two or more thereof.

19. Ink composition according to any one of claims 3 to 18, comprising from 0.1% to 30% by weight, preferably from 1% to 25% by weight, more preferably from 3% to 20% by weight, of binder.

20. Ink composition according to any one of the preceding claims, further comprising one or more plasticizer(s) in a proportion of 0.1% to 20% by weight.

21. Ink composition according to any one of claims 3 to 20, in which said dye(s) and/or pigment(s) is (are) chosen from the dyes and pigments known under the name "C.I. Solvent Dyes" and "C.I. Pigments", such as C.I. Solvent Black 29, C.I. Solvent Black 7, C.I. Solvent Black 28, C.I. Solvent Black 27, 35, and 45, C.I. Solvent Blue 70, C.I. Solvent Red 124, and dispersions of Pigment Blue 60 or of Pigment Blue 15.

22. Composition according to any one of claims 3 to 21, comprising from 0.05% to 25% by weight of dye(s) and/or pigment(s), preferably from 1% to 20%, more preferably from 3% to 10% by weight.

23. Composition according to any one of claims 2 to 22, in which the conductivity salt represents from 0.1% to 20% by weight, preferably from 0.1% to 10% by weight, more preferably from 0.1% to 5% by weight of the total weight of the ink.

24. Ink composition according to claim 23, in which said conductivity salt is chosen from alkali metal salts, alkaline earth metal salts and simple or quaternary ammonium salts, in the form of halides, perchlorates, nitrates, thiocyanates, formates, acetates, sulfates, propionates, trifluoroacetates, triflates, hexafluorophosphates, hexafluoroantimonates, tetrafluoroborates, picrates, carboxylates and sulfonates.

25. Ink composition according to any one of the preceding claims, which has a conductivity of greater than 300 µS/cm at 20°C, preferably of 500 µS/cm to 2 000 µS/cm.

26. Composition according to any one of the preceding claims, in which the molar ratio between the salt or the compound(s) that can be dissociated and the complexing compound(s) is from 0.1 to 10, preferably from 0.5 to 2.

27. Composition according to claim 26, in which the number of moles of the compound(s) that can be dissociated and of the complexing compound(s) are equal or very close.

28. Ink composition according to any one of the preceding claims, further comprising one or more additive(s) chosen from antifoaming agents, chemical stabilizers, UV stabilizers, surfactants, agents that inhibit salt corrosion; bactericides, fungicides and biocides, and pH-regulating buffers.

29. Process for marking objects by jetting an ink onto these objects by the continuous deviated jet technique, **characterized in that** the ink jetted is an ink composition according to any one of claims 1 to 28.

30. Substrate **characterized in that** it is provided with a marking obtained by drying the ink composition according to any one of claims 1 to 28.

31. Substrate according to claim 30, **characterized in that** the substrate is made of metal, for example of aluminum, of steel, of glass, of ceramic, of a material containing cellulose, such as paper, optionally coated paper or glazed paper, cardboard or wood, of synthetic polymer ("plastic"), such as PVC or PET, of polyolefin, such as polyethylene (PE) or polypropylene (PP), of "Plexiglas", or of any other nonporous or porous substance, or of a composite of several of the above materials.

## Patentansprüche

1. Bei Raumtemperatur flüssige Tintenzusammensetzung zum kontinuierlichen abgelenkten Tintenstrahldrucken umfassend:
a) - ein Lösungsmittel, das eine Hauptmenge in Gew.-% bezogen auf das Gesamtgewicht des Lösungsmittels einer oder mehrerer Lösungsmittelverbindung(en) umfasst, deren Dielektrizitätskonstante kleiner als 15 ist, wobei das Lösungsmittel wenigstens 10 Gew.-% des Gesamtgewichts der Tintenzusammensetzung darstellt,
b) - wenigstens eine ungefärbte Verbindung, die in wenigstens ein Anion und wenigstens ein Kation zu dissoziieren vermag, wobei die Verbindung wenigstens 0,1 Gew.-%, bevorzugt 0,1 bis 20 Gew.-%, weiter bevorzugt 0,1 bis 10 Gew.-% und besser 0,1 bis 5 Gew.-% des Gesamtgewichts der Tintenzusammensetzung darstellt,
c) - wenigstens eine Komplexierungsverbindung des Kations oder des Anions, die wenigstens 0,1 Gew.-% des Gesamtgewichts der Tintenzusammensetzung darstellt.

2. Tintenzusammensetzung gemäß Anspruch 1, bei der die wenigstens eine ungefärbte Verbindung, die zu dissoziieren vermag, aus Leitfähigkeitssalzen ausgewählt ist.

3. Tintenzusammensetzung gemäß einem der Salze 1 und 2, die außerdem
d) - ein oder mehrere Farbmittel und/oder Pigment(e) und
e) - ein Bindemittel umfasst.

4. Zusammensetzung gemäß Anspruch 3, bei der das oder die Farbmittel und/oder Pigment(e) aus den Farbmitteln und/oder Pigmenten ausgewählt sind, die in wenigstens ein Anion und wenigstens ein Kation zu dissoziieren vermögen.

5. Zusammensetzung gemäß Anspruch 3, bei der das oder die Farbmittel aus den Farbmitteln und/oder Pigmenten ausgewählt sind, die nicht in wenigstens ein Anion und wenigstens ein Kation zu dissoziieren vermögen.

6. Tintenzusammensetzung gemäß einem der vorangehenden Ansprüche, bei der die Komplexierungsverbindung aus auch Glyme genannten Polyethylenglykoldimethylethern, Propylenglykol- und Polypropylenglykoldimethylethern, Kronenethern, Lassoverbindungen, Kryptanden, Spheranden, Hemispheranden, Cyclodextrinen und ihren Gemischen ausgewählt ist.

7. Tintenzusammensetzung gemäß Anspruch 6, bei der die Glyme aus Glyme mit einer Masse gleich oder größer als der von Tetraglyme oder Tetraethylenglykoldimethylether ausgewählt sind.

8. Tintenzusammensetzung gemäß Anspruch 6, bei der die Polypropylenglykoldimethylether aus Ethern mit einer Masse gleich oder größer als der von Tetrapropylenglykoldimethylether ausgewählt sind.

9. Tintenzusammensetzung gemäß Anspruch 6, bei der die Kronenether aus auch 12-Krone-4 genanntem 1,4,7,10-Tetraoxacyclododecan, 1,4,7,10,13-Pentaoxacyclopentadecan oder 15-Krone-5, 1,4,7,10,13,16-Hexaoxacyclooctadecan oder 18-Krone-6, Benzo-12-krone-4, Benzo-15-krone-5, Benzo-18-krone-6, Polydibenzo-18-krone-6, Cyclohexano-15-krone-5, Cyclohexano-18-krone-6, Dibenzo-15-krone-5, Dibenzo-15-krone-5, Dibenzo-18-krone-6, Dibenzo-21-krone-7, Dibenzo-24-krone-8, Dibenzo-30-krone-10, Dicyclohexano-18-krone-6, 2-Hydroxymethyl-12-krone-4, 2-Hydroxymethyl-15-krone-5, 2-Hydroxymethyl-18-krone-6, 7,16-Dibenzyl-1,4,10,13-tetraoxa-7,16-diazacyclooctadecan, 1,4,10-Trioxa-7,13-diazacyclopentadecan, 4'-Aminobenzo-15-krone-5, 4'-Aminobenzo-18-krone-6, 4'-Aminodibenzo-18-krone-6, 2-Aminomethyl-15-krone-5, 2-Aminomethyl-18-krone-6, 4'-Amino-5'-nitrobenzo-15-krone-5, 1-Aza-12-krone-4 und ihren Gemischen ausgewählt sind.

10. Tintenzusammensetzung gemäß Anspruch 6, bei der die Kryptanden aus auch Kryptand 222 genanntem 4,7,13,16,21,24-Hexaoxa-1,10-diazabicyclo[8.8.8]hexacosan, auch Kryptand 221 genanntem 4,7,13,16,21-Pentaoxa-1,10-diazabicyclo[8.8.5]tricosan, auch Kryptand 211 genanntem 4,7,13,18-Tetraoxa-1,10-diazabicyclo[8.5.5]eicosan und ihren Gemischen ausgewählt sind.

11. Tintenzusammensetzung gemäß Anspruch 6, bei der die Cyclodextrine aus den α-, β- oder γ-Cyclodextrinen, ihren Derivaten und ihren Gemischen ausgewählt sind.

12. Zusammensetzung gemäß einem der vorangehenden Ansprüche, die wenigstens 10 Gew.-%, bevorzugt wenigstens 5 Gew.-%, weiter bevorzugt wenigstens 1 Gew.-% und besser 0 Gew.-% Wasser umfasst.

13. Zusammensetzung gemäß einem der vorangehenden Ansprüche, bei der das Lösungsmittel 30 bis 90 Gew.-% und bevorzugt 60 bis 80 Gew.-% des Gesamtgewichts der Tintenzusammensetzung darstellt.

14. Zusammensetzung gemäß einem der vorangehenden Ansprüche, bei der das Lösungsmittel eine oder mehrere organische Lösungsmittelverbindung(en) und gegebenenfalls Wasser umfasst.

15. Tintenzusammensetzung gemäß Anspruch 14, bei der die organische(n) Lösungsmittelverbindung(en) aus Alkoholen, Ketonen, Alkylenglykolethern, Alkylenglykolestern und Estern wie etwa Acetaten von Alkylenglykolethern, Dimethylformamid, N-Methylpyrrolidon, Ethern, Acetalen, Estern, aliphatischen, cyclischen oder nichtcyclischen Kohlenwasserstoffen, aromatischen oder nicht-aromatischen Kohlenwasserstoffen und Carbonaten wie etwa Propylencarbonat, Ethylencarbonat und Dimethyl- und Diethylcarbonat, und ihren Gemischen ausgewählt ist (sind).

16. Zusammensetzung gemäß Anspruch 15, bei der die organische(n) Lösungsmittelverbindung(en) aus geraden oder verzweigten, aliphatischen Alkoholen mit 1 bis 8 Kohlenstoffatomen, Ketonen mit 3 bis 10 Kohlenstoffatomen, Monoalkyl- (C₁-C₆-Alkylgruppe) oder Dialkylethern (C₁-C₆-Alkylgruppe) von Alkylenglykolen, die 1 bis 10 Kohlenstoffatome in der Alkylenkette umfassen wie etwa Ethylenglykol und Propylenglykol, Alkylenglykolestern und Estern von Alkylenglykolethern mit gesättigten, aliphatischen Carbonsäuren mit 1 bis 6 Kohlenstoffatomen ausgewählt ist (sind).

17. Tintenzusammensetzung gemäß einem der Ansprüche 3 bis 16, bei der das Bindemittel ein oder mehrere Harz(e) und/oder Polymer(e) umfasst.

18. Tintenzusammensetzung gemäß Anspruch 17, bei der das oder die Harz(e) und/oder Polymer(e) aus (Meth)Acryl-, Vinyl-, Keton-, Phenol-, Cellulose-, Styrol-, Epoxy-, Polyurethan-, Styrol-Acrylat-Harzen und Kombinationen zweier oder mehrerer davon ausgewählt ist (sind).

19. Tintenzusammensetzung gemäß einem der Ansprüche 3 bis 18, die 0,1 bis 30 Gew.-%, bevorzugt 1 bis 25 Gew.-% und weiter bevorzugt 3 bis 20 Gew.-% Bindemittel umfasst.

20. Tintenzusammensetzung gemäß einem der vorangehenden Ansprüche, die ausserdem einen oder mehrere Weichmacher zu 0,1 bis 20 Gew.-% umfasst.

21. Tintenzusammensetzung gemäß einem der Ansprüche 3 bis 20, bei der das oder die Farbmittel und/oder Pigment(e) aus den unter der Bezeichnung "C. I. Solvent Dyes" und "C. I. Pigments" bekannten Farbmitteln und Pigmenten wie etwa C. I. Solvent Black 29, C. I. Solvent Black 7, C. I. Solvent Black 28, C. I. Solvent Black 27, 35 und 45, C. I. Solvent Blue 70, C. I. Solvent Red 124 und den Dispersionen Pigment Blue 60 oder Pigment Blue 15 ausgewählt ist (sind).

22. Zusammensetzung gemäß einem der Ansprüche 3 bis 21, die 0,05 bis 25 Gew.-% Farbmittel und/oder Pigment(e), bevorzugt 1 bis 20 Gew.-% und weiter bevorzugt 3 bis 10 Gew.-% umfasst.

23. Zusammensetzung gemäß einem der Ansprüche 3 bis 22, bei der das Leitfähigkeitssalz 0,1 bis 20 Gew.-%, bevorzugt 0,1 bis 10 Gew.-% und weiter bevorzugt 0,1 bis 5 Gew.-% des Gesamtgewichts der Tinte darstellt.

24. Tintenzusammensetzung gemäß Anspruch 23, bei der das Leitfähigkeitssalz aus Alkalimetall-, Erdalkalimetall- und einfachen oder quaternären Ammoniumsalzen in Form von Halogeniden, Perchloraten, Nitraten, Thiocyanaten, Formiaten, Acetaten, Sulfaten, Propionaten, Trifluoracetaten, Triflaten, Hexafluorphosphaten, Hexafluorantimonaten, Tetrafluorboraten, Pikraten, Carboxylaten und Sulfonaten ausgewählt ist.

25. Tintenzusammensetzung gemäß einem der vorangehenden Ansprüche, die eine Leitfähigkeit größer als 300 µS/cm bei 20 °C und bevorzugt von 500 µS/cm bis 2000 µS/cm aufweist.

26. Zusammensetzung gemäß einem der vorangehenden Ansprüche, bei der das Molverhältnis zwischen dem Salz oder der (den) Verbindung(en), die zu dissoziieren vermag (vermögen) und der oder den Komplexierungsverbindung(en) 0,1 bis 10 und bevorzugt 0,5 bis 2 ist.

27. Zusammensetzung gemäß Anspruch 26, bei der die Molzahl der Verbindung(en), die zu dissoziieren vermag (vermögen) und der Komplexierungsverbindung(en) gleich oder sehr ähnlich ist.

28. Tintenzusammensetzung gemäß einem der vorangehenden Ansprüche, die ausserdem ein oder mehrere, aus Antischäummitteln, chemischen Stabilisatoren, UV-Stabilisatoren, Tensiden, Hemmmitteln einer Salzkorrosion, Bakteriziden, Fungiziden und Bioziden und pH-regulierenden Puffern ausgewähltes (ausgewählte) Additiv(e) enthält.

29. Verfahren zur Markierung von Gegenständen durch Spritzen einer Tinte auf diese Gegenstände durch die kontinuierliche, abgelenkte Tintenstrahltechnik, **dadurch gekennzeichnet, dass** die aufgespritzte Tinte eine Tintenzusammensetzung gemäß einem der Ansprüche 1 bis 28 ist.

30. Substrat **dadurch gekennzeichnet, dass** es mit einer Markierung versehen ist, die durch Trocknung der Tintenzusammensetzung gemäß einem der Ansprüche 1 bis 28 erhalten wurde.

31. Substrat gemäß Anspruch 30, **dadurch gekennzeichnet, dass** das Substrat aus Metall, zum Beispiel aus Aluminium, aus Stahl, aus Glas, aus Keramik, aus einem cellulosehaltigen Material wie etwa gegebenenfalls beschichtetem oder satiniertem Papier, aus Karton oder Holz, aus einem synthetischen Polymer ("Kunststoff") wie etwa PVC, PET, aus einem Polyolefin wie etwa Polyethylen (PE), Polypropylen (PP), aus "Plexiglas" oder aus einer ganz anderen nicht-porösen oder porösen Substanz oder aus einem Verbund mehrerer voranstehender Materialien besteht.
